# EUROPEAN PATENT APPLICATION

(11) **EP 4 488 312 A1**
(43) Date of publication of application: **08.01.2025**
(21) Application number: 23759871.9
(22) Date of filing: 17.02.2023
(51) Int. Cl.: C08G 18/80, C09D 175/00

(54) **BLOCK ISOCYANATE COMPOSITION, COATING MATERIAL COMPOSITION AND COATING FILM**

(30) Priority: 28.02.2022 JP 2022028985
(71) Applicant: Asahi Kasei Kabushiki Kaisha, Tokyo 1000006 (JP)
(72) Inventor: NAKANISHI Yuki, Tokyo 100-0006 (JP)
(74) Representative: Strehl Schübel-Hopf & Partner
(86) International application number: PCT/JP2023/005641
(87) International publication number: WO 2023/162870

(57) **Abstract**

A block isocyanate composition according to the present invention which contains a block isocyanate derived from a polyisocyanate compound and two or more types of block agents, wherein the polyisocyanate compound contains an aliphatic triisocyanate which has a molecular weight of 200-350, inclusive, and a glass transition temperature of 40-120°C, inclusive.

## Description

### Technical Field

The present invention relates to a blocked isocyanate composition, a coating composition and a coating film.

The present invention claims priority on the basis of Japanese Patent Application No. 2022-028985 filed in Japan on February 28, 2022, the contents of which are incorporated herein by reference.

### Background Art

In recent years, there has been a significant increase in user awareness relating to environmental issues in the coating and painting industry. Against such a background, the importance of coating technology that responds to environmental problems is increasing, and the shift from solvent-type coating materials to high-solid, water-based, or powder coating materials is progressing. Since powder coating materials do not use any organic solvents, there is no risk of fire or poisoning. Moreover, since the coating material can be collected and reused, there is little environmental pollution, and thus there is an increasing demand to make polyurethane coating materials in a powder form.

At present, a polyurethane powder coating material is mainly produced by melt-mixing a polyester polyol as the main agent and a blocked polyisocyanate as a curing agent in an extruder at a temperature at which the blocking agent does not dissociate, followed by pulverizing the resultant to obtain a coating material. For example, Patent Document 1 discloses a blocked polyisocyanate obtained by blocking isocyanate groups of a polyisocyanate derived from isophorone diisocyanate (hereinafter, may be referred to as "IPDI") with a blocking agent such as ε-caprolactam.

In addition, Patent Documents 2 and 3 disclose polyuretdione-type curing agents that use polyisocyanates derived from 1PD1 but do not use any blocking agents, for example.

Furthermore, Patent Document 4 discloses a polyuretdione-type curing agent that uses a polyisocyanate derived from tolylene diisocyanate or hexamethylene diisocyanate (hereinafter, may be referred to as "HDI") but does not use any blocking agents.

These polyuretdione-type curing agents are used as curing agents of powder coating materials, since a uretdione group formed by two mol of isocyanate groups is dissociated into two mol of isocyanate groups during coating and baking, thereby allowing the isocyanate groups to react with a polyol.

### Citation List

### Patent Documents

Patent Document 1: Publication of Japanese Examined Patent Application No. Sho 61-31744
Patent Document 2: Publication of Japanese Examined Patent Application No. Sho 64-5627
Patent Document 3: Publication of Japanese Examined Patent Application No. Hei 2-16332
Patent Document 4; Publication of Japanese Examined Patent Application No. Sho 57-46447

### Summary of Invention

### Technical Problem

In recent years, a curing agent of polyurethane powders has been required to realize both blocking resistance and coating film appearance.

### However, although the curing agents of powder coating materials described in

Patent Documents 1 to 4 exhibit excellent blocking resistance, they have problems in terms of coating film appearance such as gloss and smoothness (image clarity) of a cured coating film.

The present invention has been made in view of the above-mentioned circumstances, and provides a blocked isocyanate composition that exhibits excellent gloss and smoothness when formed into a coating film while maintaining good blocking resistance. Furthermore, a coating composition and a coating film using the blocked isocyanate composition are provided.

### Solution to Problem

The present invention encompasses the following aspects.
(1) A blocked isocyanate composition containing a blocked isocyanate derived from a polyisocyanate compound and at least two blocking agents, wherein
   the polyisocyanate compound contains an aliphatic triisocyanate having a molecular weight of 200 to 350, and
   the glass transition temperature is 40°C to 120°C.
(2) The blocked isocyanate composition according to (1) mentioned above, wherein the aliphatic triisocyanate is a compound of the general formula (1). 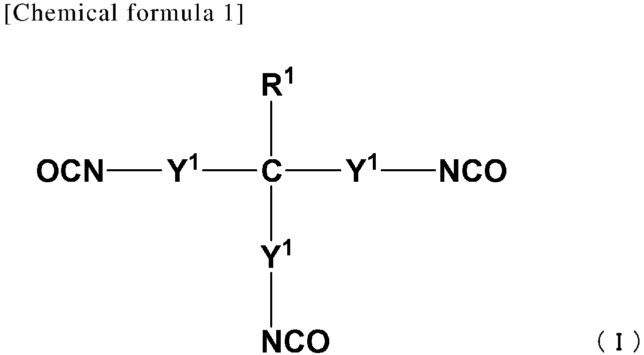 (In the general formula (I), a plurality of Y¹ is each independently a single bond, or a C1-20 divalent aliphatic hydrocarbon group which may contain at least one selected from the group consisting of an ester structure and an ether structure. The plurality of Y¹ may be identical to or different from each other. R¹ is a hydrogen atom or a C1-12 monovalent aliphatic hydrocarbon group.)
(3) The blocked isocyanate composition according to (1) or (2) mentioned above, wherein the dissociation temperature of the blocking agents is 120°C to 150°C.
(4) The blocked isocyanate composition according to any one of (1) to (3) mentioned above, wherein the blocking agents contain an amine-based thermally-dissociable blocking agent (b1) having a cycloalkane structure and a thermally-dissociable blocking agent (b2) different from the amine-based thermally-dissociable blocking agent (b1).
(5) The blocked isocyanate composition according to (4) mentioned above, wherein the percentage of the amine-based thermally-dissociable blocking agent (b1) relative to the total mol of the blocking agents is 20% by mol to 95% by mol.
(6) The blocked isocyanate composition according to (5) mentioned above, wherein the percentage of the amine-based thermally-dissociable blocking agent (b1) relative to the total mol of the blocking agents is 40% by mol to 80% by mol.
(7) The blocked isocyanate composition according to any one of (4) to (6) mentioned above, wherein the thermally-dissociable blocking agent (b2) is at least one selected from the group consisting of pyrazole-based compounds, oxime-based compounds, lactam-based compounds, alcohol-based compounds, and triazole-based compounds.
(8) The blocked isocyanate composition according to (7) mentioned above, wherein the thermally-dissociable blocking agent (b2) is a pyrazole-based compound or a triazole-based compound.
(9) The blocked isocyanate composition according to any one of (4) to (8) mentioned above, wherein the percentage of the thermally-dissociable blocking agent (b2) relative to the total mol of the blocking agents is 20% by mol to 60% by mol.
(10) The blocked isocyanate composition according to any one of (1) to (9) mentioned above, wherein the blocked isocyanate composition is in a powder form.
(11) The blocked isocyanate composition according to any one of (1) to (10) mentioned above, wherein the blocked isocyanate composition includes an amorphous part.
(12) A coating composition containing: the blocked isocyanate composition of any one of (1) to (11) mentioned above; and an active hydrogen compound.
(13) A coating film formed by curing the coating composition of (12) mentioned above.
(14) A method for producing a blocked isocyanate composition, including: reacting an aliphatic triisocyanate having a molecular weight of 200 to 350 and at least two blocking agents, wherein
   a blocking agent (c1) that increases the glass transition temperature of the blocked isocyanate composition and a blocking agent (c2) that decreases the glass transition temperature of the blocked isocyanate composition are blended as the blocking agents to adjust the glass transition temperature to 40°C to 120°C.

### Advantageous Effects of Invention

The blocked isocyanate composition of the above-mentioned aspect makes it possible to provide a blocked isocyanate composition that exhibits excellent gloss and smoothness (image clarity) when made into a coating film while maintaining good blocking resistance and curability. The coating composition of the above-mentioned aspect contains the blocked isocyanate composition and exhibits excellent gloss and smoothness when made into a coating film. The coating film of the above-mentioned aspect is formed by curing the coating composition, and exhibits excellent gloss and smoothness.

### Description of Embodiments

Hereinafter, an embodiment in which the present invention is carried out (hereinbelow, referred to simply as "the present embodiment") will be explained specifically. The present embodiment mentioned below is an illustration to explain the present invention, and is not intended to limit the present invention to the following content. The present invention may be appropriately modified within the scope of its gist to be carried out.

### <Blocked isocyanate composition>

A blocked isocyanate composition of the present embodiment contains a blocked isocyanate derived from a polyisocyanate compound and at least two blocking agents.

The polyisocyanate compound is an aliphatic triisocyanate having a molecular weight of 200 to 350. In the present invention, the term "polyisocyanate" refers to a compound having at least two isocyanate groups.

The glass transition temperature of the blocked isocyanate composition is 40°C to 120°C, preferably 40°C to 100°C, and more preferably 50°C to 80°C.

The glass transition temperature is a value obtained with DSC (differential scanning calorimeter).

In the blocked isocyanate composition of the present embodiment, the dissociation temperature of the blocking agents is preferably 120°C to 150°C. In the present specification, the dissociation temperature of the blocking agents is an index of the blocked isocyanate composition, and can be measured by the method described in Examples. When the dissociation temperature of the blocking agents is 120°C to 150°C, the low-temperature curability is excellent. The dissociation temperature of the blocking agents is more preferably 120°C to 140°C, and even more preferably 125°C to 135°C.

Although the form of the blocked isocyanate composition of the present embodiment is not particularly limited, the blocked isocyanate composition is preferably in a powder form. Namely, when the blocked isocyanate composition of the present embodiment is in a powder form, the blocked isocyanate composition may be referred to as a powdered curing agent composition of a coating material.

More specifically, the blocked isocyanate composition of the present embodiment is preferably in a powder form at 23°C. The term "in a powder form" indicates an aggregate of particles having a particle size of, for example, 300 µm or less, and more preferably 150 µm or less. The content of particles having a particle size of 300 µm or less, and more preferably 150 µm or less, is preferably 95% by volume or more relative to the total volume of the blocked isocyanate composition.

The blocked isocyanate composition of the present embodiment preferably includes an amorphous part.

The constituent components of the blocked isocyanate composition of the present embodiment will be explained in detail below.

### «Blocked isocyanate»

The blocked isocyanate is derived from a polyisocyanate compound and at least two blocking agents, namely, a reaction product of a polyisocyanate compound and blocking agents. In other words, at least some isocyanate groups in the polyisocyanate compound are blocked with the blocking agents.

The polyisocyanate compound used in the present embodiment contains an aliphatic triisocyanate having a molecular weight of 200 to 350. The molecular weight of the aliphatic triisocyanate is preferably 200 to 300, and more preferably 220 to 270. When the molecular weight of the aliphatic triisocyanate is the above-mentioned lower limit or more, the blocking resistance tends to be further improved. In contrast, when the molecular weight is the above-mentioned upper limit or less, the compatibility with the main agent can be improved.

One type of the polyisocyanate compound may be used alone, or at least two types thereof may be used in combination.

The percentage of the aliphatic triisocyanate having a molecular weight of 200 to 350 relative to the total mass of the polyisocyanate compound is preferably 10% by mass to 80% by mass, and more preferably 30% by mass to 60% by mass.

### [Aliphatic triisocyanate]

An aliphatic triisocyanate is of the following general formula (I) (hereinafter, may be described as triisocyanate compound (I)).

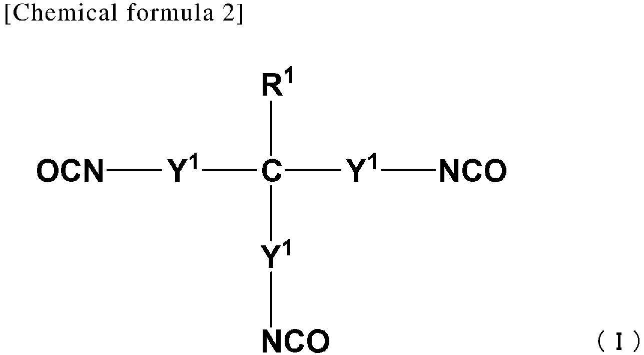

### (Y¹)

In the general formula (1), a plurality of Y¹ is each independently a single bond or a C1-20 divalent aliphatic group which may contain at least one selected from the group consisting of an ester structure and an ether structure. The plurality of Y¹ may be identical to or different from each other.

The aliphatic hydrocarbon group may be linear, branched or cyclic.

Examples of the linear or branched aliphatic hydrocarbon group include alkanediyl groups (alkylene groups), and alkylidene groups.

Examples of the alicyclic hydrocarbon group include cycloalkylene groups.

Among these, a C1-6 alkylene group is preferable as the aliphatic hydrocarbon group as Y¹.

Examples of the C1-20 divalent aliphatic hydrocarbon group which contains at least one selected from the group consisting of an ester structure and an ether structure include groups of the following general formula (II).

*¹-(CH₂)ₙ₁-X-(CH₂)ₙ₂-^{*2} (II)

In the general formula (II), *1 is a bond with a carbon in the general formula (I), and *2 is a bond with NCO in the general formula (I). Although n1 and n2 are each independently an integer of 0 to 20 which satisfies: 1≤n1 + n2 ≤20, a case in which both n1 and n2 are 0 is excluded, and n2 in the side bonded with NCO is preferably 1 or more.

Among them, n1 and n2 are each independently and preferably an integer of 0 to 4, and more preferably an integer of 0 to 2.

As the combination of n1 and n2, a combination of n1 is 0 and n2 is 2, and a combination of n1 is 2 and n2 is 2 are preferable.

In the general formula (II), X is an ester group or an ether group. Among them, X is preferably an ester group in terms that the reaction rate is increased.

In the case where at least one of the plurality of Y¹ is an aliphatic hydrocarbon group, the viscosity of the blocked isocyanate composition of the present embodiment can be further decreased, and the weather resistance of a coating film formed using the blocked isocyanate composition of the present embodiment as a curing agent of a coating composition can be further improved.

In the case where at least one of the plurality of Y¹ has an ester structure, the heat resistance of the blocked isocyanate composition of the present embodiment can be further improved, and the reactivity of an isocyanate group when used as a curing agent of a coating composition can be further enhanced.

In the case where at least one of the plurality of Y¹ preferably consists of aliphatic hydrocarbon groups, more preferably all of the plurality of Y¹ consist of aliphatic hydrocarbon groups, the hydrolysis resistance of the blocked isocyanate composition of the present embodiment can be further improved.

### (R¹)

In the general formula (I), R¹ is a hydrogen atom or a C1-12 monovalent aliphatic hydrocarbon group. The aliphatic hydrocarbon group as R¹ is not particularly limited, and examples thereof include alkyl groups, alkenyl groups and alkynyl groups. Among them, R¹ is preferably a hydrogen atom.

In the case where at last one of the plurality of Y¹ has an aliphatic hydrocarbon group in the present embodiment, preferable examples of the triisocyanate compound (I) include: 4-isocyanate methyl-1,8-octamethylenediisocyanate disclosed in the publication of Japanese Examined Patent Application No. Sho 63-15264 (Patent Document 3) (hereinafter, referred to as "NTI", and having a molecular weight of 251); 1,3,6-hexamethylene triisocyanate disclosed in the publication of Japanese Unexamined Patent Application No. Sho 57-198760 (Reference Document 1) (hereinafter, referred to as "HT1", and having a molecular weight of 209); bis(2-isocyanatoethyl) 2-isocyanato glutarate disclosed in the publication of Japanese Examined Patent Application No. Hei 4-1033 (Reference Document 2) (hereinafter, referred to as "GTI" and having a molecular weight of 311); and lysine triisocyanate disclosed in the publication of Japanese Unexamined Patent Application No. Sho 53 - 135931 (Reference Document 3) (hereinafter, referred to as "LTI" and having a molecular weight of 267).

Among them, NTI, GTI or LTI is preferable, and NTI or LTI is more preferable, from the viewpoint of further improving the reactivity of isocyanate groups.

In the case where at least one of the plurality of Y¹ has an ester structure in the present embodiment, preferable examples of the triisocyanate compound (1) include: GT1 disclosed in the publication of Japanese Examined Patent Application No. Hei 4-1033 (Reference Document 2) (having a molecular weight of 311); and LTI disclosed in the publication of Japanese Unexamined Patent Application No. Sho 53-135931 (Reference Document 3) (having a molecular weight of 267).

In the case where at least one of the plurality of Y¹ consists of aliphatic hydrocarbon groups in the present embodiment, preferable examples of the triisocyanate compound (I) include: NTI disclosed in the publication of Japanese Examined Patent Application No. Sho 63-15264 (Patent Document 3) (having a molecular weight of 251); and HTI disclosed in the publication of Japanese Unexamined Patent Application No. Sho 57-19876 (Reference Document 1) (having a molecular weight of 209).

The triisocyanate compound may be obtained, for example, by subjecting an amino acid derivative or an amine such as an ether amine or an alkyl triamine to an isocyanate-forming reaction.

Examples of the amino acid derivative include 2,5-diaminovaleric acid, 2,6-diaminohexanoic acid, asparaginic acid, and glutamic acid. These amino acid derivatives are diamine monocarboxylates or monoamine dicarboxylate, and therefore can be made to be triamines having an ester group by esterifying a carboxyl group thereof with an alkanol amine such as ethanol amine. The resultant triamine having an ester group can be made to be a triisocyanate compound (I) having an ester structure by phosgenation of amine or the like.

Examples of the ether amine include polyoxyalkylenetriamine manufactured by MITSUI FINE CHEMICAL Inc., under the trade name of "D403". The ether amine is a triamine, and may be made to be a triisocyanate compound having an ether structure by phosgenation of amine or the like.

Examples of the alkyl triamine include triisocyanatononane (4-aminomethyl-1,8-octanediamine). The alkyl triamine is a triamine, and can be made to be a triisocyanate compound consisting of hydrocarbons by phosgenation of the amine.

In addition to the above-mentioned aliphatic triisocyanates, a polyisocyanate other than the above-mentioned aliphatic triisocyanates may be used. Specific examples thereof include aliphatic diisocyanates, alicyclic diisocyanates, and polyisocyanate compounds obtained by polymerization thereof.

### [Aliphatic diisocyanates]

In the present embodiment, the term "aliphatic diisocyanate" refers to a compound which has two isocyanate groups and a linear aliphatic hydrocarbon in a molecule thereof without having any aromatic hydrocarbons.

Although the aliphatic diisocyanate is not particularly limited, the carbon number thereof is preferably 4 to 30, and examples thereof include tetramethylene diisocyanate, pentamethylene diisocyanate, hexamethylene diisocyanate (hereinafter, abbreviated as "HDI"), 2,2,4-trimethyl-1,6-hexamethylene diisocyanate, and lysine diisocyanate.

Among them, HDI is more preferable in terms of the ease of industrial availability. One of the above-mentioned aliphatic diisocyanates may be used alone, or at least two thereof may be used in combination.

### [Alicyclic diisocyanates]

In the present embodiment, the term "alicyclic diisocyanate" refers to a compound having two isocyanate groups and an alicyclic hydrocarbon with no aromaticity in a molecule thereof.

Although the alicyclic diisocyanate is not particularly limited, the carbon number thereof is preferably 8 to 30, and examples thereof include isophorone diisocyanate (hereinafter, abbreviated as "IPDI"), 1,3-bis(isocyanatomethyl)-cyclohexane, 4,4'-dicyclohexylmethane diisocyanate, norbornene diisocyanate, and hydrogenated xylylene diisocyanate.

Among them, IPD is more preferable in terms of the weather resistance and the ease of industrial availability. One of the above-mentioned alicyclic diisocyanates may be used alone, or at least two thereof may be used in combination.

The polyisocyanate may be the above-mentioned aliphatic diisocyanate or alicyclic diisocyanate, or a polyisocyanate compound obtained by polymerization thereof to have, in a molecule thereof, at least one selected from the group consisting of an isocyanurate structure, a biuret structure, a uretdione structure, an iminooxadiazinedione structure, a urethane structure and an allophanate structure.

### [Blocking agent]

At least two blocking agents are contained, and both of an amine-based thermally-dissociable blocking agent (b1) having a cycloalkane structure and a thermally-dissociable blocking agent (b2) different from the amine-based thermally-dissociable blocking agent (b1) are preferably contained.

Hereinafter, the term "amine-based thermally-dissociable blocking agent (b1) having a cycloalkane structure" may be abbreviated as "blocking agent (b1)", and the term "thermally-dissociable blocking agent (b2) different from the amine-based thermally-dissociable blocking agent (b1)" may be abbreviated as "blocking agent (b2)".

The blocking agent (b1) is an amine-based thermally-dissociable blocking agent having a cycloalkane structure.

The term "thermally-dissociable" means the property of regenerating isocyanate groups by dissociating blocking agents bonded to the isocyanate groups by heating. The temperature required for dissociation varies depending on the structure of the blocking agents, but is, for example, 40°C to 300°C.

The glass transition temperature of the blocked isocyanate composition tends to be increased with the blocking agent (b1) and decreased with the blocking agent (b2). Therefore, the glass transition temperature of the blocked isocyanate composition can be made within a specific range by adjusting the contents of the blocking agents (b1) and (b2). Furthermore, it is possible not only to adjust the glass transition temperature, but also to improve the coating film appearance and the low-temperature curability depending on the type of the blocking agent (b2).

### (Blocking agent (b1))

Although the blocking agent (b1) is not particularly limited, the blocking agent (b1) is preferably a secondary amine compound from the viewpoint of reactivity.

Examples of the blocking agent (b1) include dicyclohexylamine, dicyclopentylamine, isopropylcyclohexylamine, isobutylcyclohexylamine, methylcyclohexylamine, and ethylcyclohexylamine.

One type of these compounds may be used alone or at least two types thereof may be used in combination.

### (Blocking agent (b2))

In the present embodiment, a thermally-dissociable blocking agent (b2) that is different from the blocking agent (b1) is contained in addition to the blocking agent (b1).

As the blocking agent (b2), (1) a pyrazole-based compound, (2) an oxime-based compound, (3) a lactam-based compound, (4) an alcohol-based compound, or (5) a triazole-based compound is preferable from the viewpoint of effects of reducing the glass transition temperature of the blocked isocyanate composition and improving the coating film appearance.

More specific examples of the blocking agent (b2) include the following compounds.
(1) Pyrazole-based compounds: pyrazole, 3-methylpyrazole, 3,5-dimethylpyrazole, and the like.
(2) Oxime-based compounds: formaldoxime, acetoaldoxime-, acetoxime, methylethylketoxime, cyclohexanone oxime, acetophenoxime, and the like.
(3) Lactam-based compounds: ε-caprolactam, and the like.
(4) Alcohol-based compounds: methanol, ethanol, 1-propanol, 2-propanol, 1-butanol, sec-butanol, 2-ethyl-1-hexanol, cyclohexanol, 2-methoxyethanol, 2-ethoxyethanol, 2-butoxyethanol, benzyl alcohol, trifluoroethanol, hexafluoro-2-propanol, 2-methyl-1-propanol, 1-dodecanol, 1-octadecanol, phenol, tert-butanol, and the like.
(5) Triazole-based compounds: 1,2,4-triazole, 1,2,3-triazole, and the like.

Among them, the blocking agent (b2) is preferably a pyrazole-based compound or a triazole-based compound from the viewpoint of excellent curability at a low temperature, and is more preferably a pyrazole-based compound from the viewpoint of excellent blocking resistance.

Although the percentage of the blocking agent (b1) relative to the total mol of the blocking agents is not particularly limited in the blocked isocyanate composition of the present embodiment, the percentage is preferably 20% by mol to 95% by mol, and more preferably 40% by mol to 80% by mol.

When the percentage of the blocking agent (b1) is the above-mentioned lower limit or more, the blocked isocyanate composition is imparted with excellent blocking resistance. When the percentage of the blocking agent (b1) is the above-mentioned upper limit or less, the blocked isocyanate composition is imparted with excellent curability at a low temperature, as well as excellent gloss and smoothness when made into a coating film.

The percentage of the blocking agent (b1) relative to the total mol of the blocking agents may be calculated, for example, by dividing the blended amount (molar amount) of an amine-based compound used during production by the total blended amount (molar amount) of the blocking agent and then multiplying the divided value by 100 (calculation method 1). Alternatively, the percentage may be calculated from the peak area value derived from each blocking agent by ¹H-NMR, for example (calculation method 2).

When the blocked isocyanate composition is produced, the percentage of the blocking agent (b1) may be adjusted by the above-mentioned calculation method 1.

When the percentage of the blocking agent (b1) in a blocked isocyanate composition which has been already produced is calculated, the above-mentioned calculation method 2 may be used.

Since the blocked isocyanate composition of the present embodiment has the above-mentioned configuration, the blocked isocyanate composition exhibits excellent curability at a low temperature while maintaining good blocking resistance, and provides a coating film having excellent gloss and smoothness (image clarity).

Although the percentage of a blocking agent (b2) relative to the total mol of the blocking agents is not particularly limited in the blocked isocyanate composition of the present embodiment, the percentage is preferably 10% by mol to 70% by mol, and more preferably 20% by mol to 60% by mol.

When the percentage of the blocking agent (b2) is the above-mentioned lower limit or more, the blocked isocyanate composition is imparted with excellent curability at a low temperature or excellent gloss and smoothness. When the percentage of the blocking agent (b2) is the above-mentioned upper limit or less, the blocked isocyanate composition is imparted with excellent blocking resistance.

The percentage of the blocking agent (b2) relative to the total mol of the blocking agents may be calculated, for example, by dividing the blended amount (molar amount) of an amine-based compound used during production by the total blended amount (molar amount) of the blocking agents and then multiplying the divided value by 100 (calculation method 1). Alternatively, the percentage may be calculated from the peak area value derived from each blocking agent by ¹H-NMR, for example (calculation method 2).

When the blocked isocyanate composition is produced, the percentage of the blocking agent (b1) may be adjusted by the above-mentioned calculation method 1.

When the percentage of the blocking agent (b1) in a blocked isocyanate composition which has been already produced is calculated, the above-mentioned calculation method 2 may be used.

### <Method for producing blocked isocyanate composition>

The method for producing the blocked isocyanate composition of the present embodiment includes a step of reacting an aliphatic triisocyanate having a molecular weight of 200 to 350 (preferably the above-mentioned triisocyanate compound (I)) with at least two blocking agents to block an isocyanate group of the aliphatic triisocyanate with the blocking agents (hereinafter, may be referred to as "blocking reaction", for example.

The blocking reaction is characterized in that the glass transition temperature of the blocked isocyanate composition is adjusted to 40°C to 120°C using both a blocking agent (c1) that increases the glass transition temperature of the blocked isocyanate composition and a blocking agent (c2) that decreases the glass transition temperature of the blocked isocyanate composition.

The above-mentioned blocking agent (b1) is preferably used as the blocking agent (c1), and the percentage of the blocking agent (c1) relative to the total mol of the blocking agents is preferably the same as the percentage of the blocking agent (b1) relative to the total mol of the blocking agents.

The above-mentioned blocking agent (b2) is preferably used as the blocking agent (c2), and the percentage of the blocking agent (c2) relative to the total mol of the blocking agents is preferably the same as the percentage of the blocking agent (b2) relative to the total mol of the blocking agents.

In the blocking reaction, isocyanate groups of the aliphatic triisocyanate are entirely or partially blocked.

When isocyanate groups of the aliphatic triisocyanate are entirely blocked, the ratio of the total mol of the blocking agents relative to the molar amount of isocyanate groups of the aliphatic triisocyanate (the total mol of the blocking agents / the molar amount of isocyanate groups) is preferably 0.8 to 1.3.

When the blocking agents are blended such that the above-mentioned ratio is satisfied, excess or unreactive blocking agents remain.

The blocking reaction may be carried out in the absence of a solvent, or in the presence of an organic solvent with no reactivity with isocyanate groups, as needed.

Although the organic solvent is not particularly limited, specific examples thereof include the following compounds.
(i)Aliphatic hydrocarbon-based solvents such as hexane, heptane, and octane.
(ii) Alicyclic hydrocarbon-based solvents such as cyclohexane, and methylcyclohexane.
(iii) Ketone-based solvents such as acetone, methyl ethyl ketone, methyl isobutylketone, and cyclohexanone.
(iv) Ester-based solvents such as methyl acetate, ethyl acetate, butyl acetate, and isobutyl acetate.
(v) Aromatic solvents such as toluene, xylene, diethylbenzene, mesitylene, anisole, and chlorobenzene.
(vi) Glycol-based solvents such as ethylene glycol monoethyl ether acetate, 3-methyl-3-methoxybutyl acetate, and propylene glycol monomethyl ether acetate.
(vii) Ether-based solvents such as diethyl ether, tetrahydrofuran, and dioxane.
(viii) Halogenated hydrocarbon-based solvents such as dichloromethane, 1,2-dichloroethane, and chloroform.
(ix) Pyrrolidone-based solvents such as N-methyl-2-pyrrolidone.
(x) Amide-based solvents such as N,N-dimethylacetamide, and N,N-dimethylformamide.
(xi) Sulfoxide-based solvents such as dimethyl sulfoxide.
(xii) Lactone-based solvents such as γ-butyrolactone.
(xiii) Amine-based solvents such as morpholine.

One of these organic solvents may be used alone or a mixture of at least two thereof may be used. Furthermore, the organic solvent may be removed after the reaction.

A catalyst may be used in the blocking reaction. Although examples of the catalyst include: organic metal salts of tin, zinc, lead or the like; tertiary amine-based compounds; and alcoholates of alkali metals such as sodium, the catalyst is not limited to these.

The blocking reaction may be carried out generally at -20°C to 150°C, preferably at 0°C to 120°C, and more preferably 10°C to 100°C. When the temperature during the blocking reaction is the above-mentioned lower limit or more, the reaction rate can be further enhanced. When the temperature during the blocking reaction is the above-mentioned upper limit or less, the side-reaction can be further suppressed.

After the blocking reaction, a neutralization treatment may be carried out by adding an acidic compound or the like.

The acidic compound may be an inorganic acid or an organic acid. Examples of the inorganic acid include hydrochloric acid, phosphorous acid, and phosphoric acid. Examples of organic acids include methanesulfonic acid, p-toluenesulfonic acid, dioctyl phthalate, and dibutyl phthalate.

### <Physical properties of blocked isocyanate composition>

The effective isocyanate group (NCO) content of the blocked isocyanate composition of the present embodiment is preferably 10% by mass to 30% by mass, and more preferably 12% by mass to 25% by mass.

The term "effective isocyanate group (NCO) content" as used herein refers to the quantified content of blocked isocyanate groups present in the blocked isocyanate composition after the blocking reaction and capable of participating in the cross-linking reaction, and is indicated by the percentage of isocyanate groups based on mass relative to the total mass of the blocked isocyanate composition after the blocking reaction.

The effective NCO content may be calculated, for example, by the following formula. In the following formula, the term "NCO %" refers to the content of isocyanate groups of the triisocyanate compound (I). (Effective NCO content (% by mass)) = [(content (% by mass) of solid component of blocked isocyanate composition) × {(mass of triisocyanate compound (I) used in blocking reaction) × NCO%}] / (mass of blocked isocyanate composition after blocking reaction)

### <Coating composition>

A coating composition of the present embodiment contains the above-mentioned blocked isocyanate composition and an active hydrogen compound.

The coating composition of the present embodiment is preferably in a powder form at 23°C.

A coating film having excellent gloss and smoothness can be obtained by containing the above-mentioned blocked isocyanate composition as a curing agent component in the coating composition of the present embodiment.

### <<Active hydrogen compound>>

Although the active hydrogen compound is not particularly limited, the active hydrogen compound is specifically a compound in which at least two active hydrogens are bonded in a molecule thereof, and examples thereof include polyol compounds, polyamine compounds, and polythiol compounds. Among them, the active hydrogen compound is preferably a polyol compound from the viewpoint of toughness. Specifically, when a polyol compound is used as the active hydrogen compound, a coating composition may also be referred to as a polyurethane coating composition.

### [Polyol compound]

Although the polyol compound is not particularly limited, specific examples thereof include polyester polyols, acryl polyols, polyether polyols, polyolefin polyols, fluorinated polyols, polycarbonate polyols, epoxy resins, and urethane polyols. Among them, at least one selected from the group consisting of polyester polyols which are liquid or solid at room temperature (approximately at a temperature of 20°C to 30°C), acryl polyols, and fluorinated polyols is preferable.

Although the polyester polyol is not particularly limited, examples thereof include products obtained by a condensation reaction of one or a mixture of dibasic acids and one or a mixture of polyhydric alcohols.

Although the dibasic acid is not particularly limited, at least one dibasic acid selected from carboxylic acids such as succinic acid, adipic acid, sebacic acid, dimer acid, maleic anhydride, phthalic anhydride, isophthalic acid, and terephthalic acid is used, for example.

Although the polyhydric alcohol is not particularly limited, at least one polyhydric alcohol selected from the group consisting of ethylene glycol, propylene glycol, diethylene glycol, neopentyl glycol, trimethylolpropane, and glycerol is used, for example.

Alternative examples of the polyester polyol include polycaprolactone obtained by ring-opening polymerization of ε-caprolactone using a polyhydric alcohol, and esters obtained from aliphatic hydrocarbon compounds having a hydroxyl group and a polyhydric alcohol.

Although the acrylic polyols are not particularly limited, examples thereof include products obtained by copolymerizing one or a mixture of ethylenically unsaturated bond-containing monomers having a hydroxyl group with one or a mixture of ethylenically unsaturated bond-containing monomers copolymerizable therewith and different therefrom.

Although the ethylenically unsaturated bond-containing monomers having a hydroxyl group are not particularly limited, examples thereof include hydroxyethyl acrylate, hydroxypropyl acrylate, hydroxybutyl acrylate, hydroxyethyl methacrylate, hydroxypropyl methacrylate, and hydroxybutyl methacrylate.

Although the ethylenically unsaturated bond-containing monomers copolymerizable with the ethylenically unsaturated bond-containing monomer having a hydroxyl group and different therefrom are not particularly limited, examples thereof include acrylic acid esters, methacrylic acid esters, unsaturated carboxylic acids, unsaturated amides, vinyl-based monomers, and vinyl-based monomers having a hydrolyzable silyl group.

Examples of the acrylic acid esters include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

Examples of the methacrylic acid esters include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

Examples of the unsaturated carboxylic acids include acrylic acid, methacrylic acid, maleic acid, and itaconic acid.

Examples of the unsaturated amides include acrylamide, methacrylamide, N,N-methylenebisacrylamide, diacetoneacrylamide, diacetonemethacrylamide, maleic acid amide, and maleimide.

Examples of the vinyl-based monomers include glycidyl methacrylate, styrene, vinyltoluene, vinyl acetate, acrylonitrile, and dibutyl fumarate.

Examples of the vinyl-based monomers having a hydrolyzable silyl group include vinyl trimethoxysilane, vinylmethyl dimethoxysilane, and γ-(meth)acryloxypropyl trimethoxysilane.

Although the polyether polyols are not particularly limited, examples thereof include: polyether polyols obtained by adding one or a mixture of alkylene oxides to one or a mixture of polyhydric alcohols using an alkali metal hydroxide or a strong basic catalyst; polyether polyols obtained by reacting an alkylene oxide with a polyamine compound; and polymer polyols obtained by polymerizing acrylamides using the above-mentioned polyether polyols as mediums.

Examples of the alkali metal include lithium, sodium, and potassium.

Examples of the strong basic catalyst include alkolates, and alkylamines.

Examples of the polyhydric alcohol include those mentioned above for the polyester polyols. Additional examples of the polyhydric alcohol include non-sugars, sugar alcohol-based compounds, monosaccharides, disaccharides, trisaccharides, and tetrasaccharides. Examples of the non-sugars include diglycerol, ditrimethylolpropane, pentaerythritol, and dipentaerythritol. Examples of the sugar alcohol-based compounds include erythritol, D-traitol, L-arabinitol, ribitol, xylitol, sorbitol, mannitol, galactitol, and ramnitol. Examples of the monosaccharides include arabinose, ribose, xylose, glucose, mannose, galactose, fructose, sorbose, rhamnose, fucose, and ribodesose. Examples of the disaccharides include trehalose, sucrose, maltose, cellobiose, gentiobiose, lactose, and melibiose. Examples of the trisaccharides include raffinose, gentianose, and melicitose. Examples of the tetrasaccharides include stachyose.

Examples of the alkylene oxide include ethylene oxide, propylene oxide, butylene oxide, cyclohexene oxide, and styrene oxide.

Examples of the polyamine compound include ethylene diamines.

Examples of polyolefin polyols include hydroxy group-ended polybutadienes, hydroxy group-ended polyisoprenes, and hydrogenated products thereof.

The fluorinated polyol is a polyol containing fluorine in a molecule thereof, and examples thereof include copolymers of fluoroolefins, cyclic vinyl ethers, hydroxyalkylvinyl ethers, vinyl monocarboxylates, or the like, as disclosed in the publication of Japanese Unexamined Patent Application No. Sho 57-34107 (Reference Document 3), or the pulication of Japanese Unexamined Patent Application No. Sho 61-275311(Reference Document 4).

Although the polycarbonate polyol is not particularly limited, examples thereof include low-molecular carbonate compounds and products obtained by subjecting a low-molecular carbonate compound and a polyhydric alcohol to a condensation polymerization. Examples of the polyhydric alcohol include the same compounds as exemplified for the above-mentioned "polyester polyol".

Examples of the low-molecular carbonate compounds include dialkyl carbonates, alkylene carbonates, and diaryl carbonates.

Examples of the dialkyl carbonates include dimethyl carbonate.

Examples of the alkylene carbonates include ethylene carbonate.

Examples of the diaryl carbonates include diphenyl carbonate.

Although the epoxy resin is not particularly limited, specific examples thereof include novolac-type epoxy resins, glycidyl ether-type epoxy resins, glycol ether-type epoxy resins, epoxy-type resins of aliphatic unsaturated compounds, epoxy-type fatty acid esters, polyvalent carboxylic acid ester-type epoxy resins, aminoglycidyl-type epoxy resins, β-methylepichloro-type epoxy resins, cyclic oxirane-type epoxy resins, halogen-type epoxy resins, and resorcine-type epoxy resins.

Examples of the urethane polyol include polymers obtained by a repeating addition reaction of aromatic, aliphatic or alicyclic diisocyanates and active hydrogencontaining compounds, each polymer having a urethane bond and a side chain or an end having a hydroxy group.

The molar equivalent ratio of effective isocyanate groups in the blocked isocyanate composition to hydroxy groups in the polyol compound in the coating composition of the present embodiment ([effective isocyanate groups] / [hydroxy groups]) may be generally 1/10 to 10/1. The term "effective isocyanate groups (effective NCO)" as used herein refers to isocyanate groups present in the blocked isocyanate composition and capable of participating in the cross-linking reaction.

The hydroxyl value of the polyol compound is preferably 20 mgKOH/g to 200 mgKOH/g, more preferably 30 mgKOH/g to 200 mgKOH/g, and even more preferably 40 mgKOH/g to 180 mgKOH/g. When the hydroxyl value of the polyol compound is the above-mentioned lower limit or more, the crosslink density can be prevented from decreasing and the desired physical properties can be achieved more sufficiently. On the other hand, when the hydroxyl value of the polyol compound is the above-mentioned upper limit or less, excessive increase in crosslink density can be suppressed, and the mechanical properties of the coating film can be maintained at a higher level.

The acid value of the polyol compound is preferably 1 mgKOH/g to 60 mgKOH/g, more preferably 2 mgKOH/g to 50 mgKOH/g, even more preferably 4 mgKOH/g to 40 mgKOH/g, and particularly preferably 6 mg KOH/g to 30 mg KOH/g.

When the acid value of the polyol compound is the above-mentioned lower limit or more, the storage stability can be further improved. On the other hand, when the acid value is the above-mentioned upper limit or less, the water resistance of the obtained coating film can be further improved.

In the case where the polyol compound is a fluorinated polyol, the acid value of the fluorinated polyol is preferably 10 mgKOH/g or less.

### <<Other additives>>

In addition to the above-mentioned blocked isocyanate composition and the above-mentioned active hydrogen compound, the coating composition of the present embodiment may contain, depending on the purpose and intended use, various additives such as a curing acceleration catalyst, an antioxidant, an ultraviolet absorber, a light stabilizer, a pigment, a leveling agent, a plasticizer, a rheology control agent or a surfactant.

Although the curing acceleration catalyst is not particularly limited, specific examples thereof include tin compounds, zinc compounds, titanium compounds, cobalt compounds, bismuth compounds, zirconium compounds, and amine compounds. Examples of the tin compounds include dibutyltin dilaurate, dibutyltin diacetate, dioctyltin dilaurate, dimethyltin dineodecanoate, and tin bis(2-ethylhexanoate). Examples of zinc compounds include zinc 2-ethylhexanoate and zinc naphthenate. Examples of titanium compounds include titanium 2-ethylhexanoate and titanium diisopropoxy bis(ethylacetonate). Examples of cobalt compounds include cobalt 2-ethylhexanoate and cobalt naphthenate. Examples of bismuth compounds include bismuth 2-ethylhexanoate and bismuth naphthenate. Examples of zirconium compounds include zirconium tetraacetylacetonate, zirconyl 2-ethylhexanoate, and zirconyl naphthenate.

### <Method for producing coating composition>

When the coating composition of the present embodiment is a coating composition in a powder form, the coating composition may be produced, for example, using the following method.

First, an active hydrogen compound (preferably a polyol compound) and the above-mentioned blocked isocyanate composition are kneaded, as needed, together with the various additives described above, using an extruder or the like at a temperature of 80°C to 140°C. The kneaded product may be pulverized by a pulverizer, and the obtained pulverized product may be used as a coating composition in a powder form. The average particle size of the obtained coating composition in a powder form can be adjusted to, for example, 10 µm to 200 µm.

Alternatively, when a solvent-based coating composition is produced, first, the various additives described above are added to the active hydrogen compound or a solvent dilution thereof, if necessary. Then, the blocked isocyanate composition described above is added to the resultant as a curing agent, and if necessary, a solvent is further added thereto to adjust the viscosity. The resultant is stirred by hand or with a stirring device such as a Masellar to obtain a solvent-based coating composition.

### <Coating film>

A coating film of the present embodiment is obtained by curing the above-mentioned coating composition. The coating film of the present embodiment exhibits excellent appearance such as gloss and image clarity.

The coating film of the present embodiment can be produced, for example, using the following method.

A coating composition (preferably a coating composition in a powder form) is applied to the surface of an object to be coated by a commonly used method such as spray coating, roll coating, curtain flow coating or electrostatic coating. Then, a uniform coating film is formed on the object to be coated by heat-baking at a temperature of 160°C or higher.

A metal plate is mainly used as the object to be coated. Examples of the metal plate include stainless steel plates, aluminum plates, titanium plates, cold-rolled steel plates, galvanized steel plates, chrome-plated steel plates, aluminum-plated steel plates, and nickel-plated steel plates. In addition, if necessary, the surface of these metal plates may be cleaned by alkali degreasing or the like, or the metal surface may be subjected to a chemical conversion treatment in order to increase the adhesiveness to the coating film.

Furthermore, the metal plate may be a metal molded product that has been preformed in a predetermined manner. Alternatively, an undercoat layer may be formed in advance on the metal surface, as required. The coating thickness of the undercoat layer is preferably 100 µm or less.

In the above-mentioned coating composition, the blocking agent released when the coating composition is coated and baked onto a metal plate is highly volatile and hardly remains in a furnace. Moreover, the resulting coating film exhibits excellent weather resistance, impact resistance, surface gloss, or the like. Therefore, a precoated metal plate provided with a coating film formed by curing the above-mentioned coating composition may be used favorably, for example, in outside boxes, doors, or other parts of household appliances such as refrigerators, washing machines, air conditioners, or microwave ovens; building materials such as net fences or pipe fences or road materials such as guardrails; automobile parts such as wipers, coil springs, or bumpers, or automobile bodies; parts or bodies of special equipment such as civil engineering equipment or cultivators; office furniture such as steel furniture or steel shelves; or electrical equipment parts such as electrical boards, switchboards, radiators or transformers. Since the application range is wide, it is not limited to those listed above.

Examples of the object to be coated other than the metal plates include concrete products, wood products, and plastic products.

### Examples

Hereinafter, the present invention will be explained further specifically based on Examples and Comparative Examples, but the present invention is not limited to the following Examples.

### <Evaluation items>

Each physical property of blocked isocyanate compositions produced in Examples and Comparative Examples, coating compositions containing the blocked isocyanate compositions, and coating films obtained by curing the coating compositions was measured and evaluated according to the following method.

### <<Method for measuring physical properties >>

### [Physical property 1]

### (Isocyanate group (NCO) content)

The NCO content (% by mass) of a triisocyanate compound or a polyisocyanate compound was measured by neutralizing isocyanate groups in a measurement sample with excess 2N amine and then carrying out back titration with 1N hydrochloric acid.

### [Physical property 2]

### (Effective isocyanate group (NCO) content)

The effective NCO content of a blocked isocyanate composition was calculated using the following formula. (Effective NCO content) = {(content of isocyanate compound) × (NCO content of isocyanate compound)} / (total mass of blocked isocyanate composition)

### «Evaluation method»

### [Evaluation1]

### (Glass transition temperature)

The glass transition temperature was determined from the DSC curve obtained by subjecting 10 mg of a sample to differential scanning calorimetry with DSC7000X (manufactured by Hitachi High-Tech Corporation), more specifically determined as the "midpoint glass transition temperature" described in "Method for measuring transition temperature of plastics" of JIS K7121-1987.

### [Evaluation 2]

### (Blocking resistance)

A solid blocked isocyanate composition was pulverized into a uniform powder, placed in a glass bottle, and allowed to stand in an oven at 40°C for ten days. Then, the resultant was taken out from the oven and the state was visually confirmed. The evaluation criteria were as follows.

### (Evaluation criteria of blocking resistance)

⊚: No change was confirmed.
o: Slight blocking was confirmed.
Δ: Almost blocking was confirmed.
×: Complete blocking was confirmed.

### [Preparation of coating composition C-1]

An acrylic polyol (manufactured by Allnex Ltd., under the trade name of "SETALUX1152 SS-60") and each blocked isocyanate composition were blended at a molar equivalent ratio of effective isocyanate groups / hydroxyl groups of 1.0. Next, a tin catalyst (manufactured by PMC Organometallix under the trade name of "FASCAT 4200") was added thereto in a tin amount of 0.4 parts by mass relative to the mass of a solid component of a coating material, and then N,N-dimethyl formamide (DMF) was added thereto to adjust the percentage of the solid component of the coating material to 50% by mass, thereby obtaining each coating composition C-1.

### [Preparation of coating composition C-2]

A polyester polyol (manufactured by Japan U-Pica Company Ltd., under the trade name of "U-Pica Coat GV-110") and each blocked isocyanate composition were blended at a molar equivalent ratio of effective isocyanate groups / hydroxyl groups of 1.0. Next, a dibutyltin dilaurate was added thereto in a tin amount of 0.4 parts by mass relative to the mass of a solid component of a coating material, and then chloroform was added thereto to adjust the percentage of the solid component of the coating material to 30% by mass, thereby obtaining each coating composition C-2.

### [Preparation of coating composition C-3]

A polyester polyol (manufactured by Japan U-Pica Company Ltd., under the trade name of "U-Pica Coat GV-110") and each blocked isocyanate composition were blended at a molar equivalent ratio of effective isocyanate groups / hydroxyl groups of 1.0. Next, a benzoin was added thereto in an amount of 1.0 part by mass relative to the mass of a solid component of a coating material, a titanium oxide was added thereto in an amount of 40 parts by mass relative to the mass of the solid component of the coating material, and then chloroform was added thereto to adjust the percentage of the solid component of the coating material to 37% by mass, thereby obtaining each coating composition C-3.

### [Evaluation 2]

### (Curability (gel fraction))

The prepared coating composition C-1 was applied to an aluminum plate in a dry film thickness of 40 µm and baked at 150°C for 30 minutes to obtain a coating film. The obtained coating film was peeled off from the aluminum plate and immersed in acetone at 23°C for 24 hours to calculate the remaining film ratio after the immersion in acetone at 23°C for 24 hours as a gel fraction. The evaluation criteria of curability were as follows.

### (Evaluation criteria of curability)

⊚: The gel fraction was 90% by mass or more.
∘: The gel fraction was 85% by mass or more and less than 90% by mass.
Δ: The gel fraction was 80% by mass or more and less than 85% by mass.
×: The gel fraction was less than 80% by mass.

### (Dissociation temperature (impact resistance test))

Each of the prepared coating compositions C-2 was applied to an alodine-treated aluminum plate in a dry film thickness of 40 µm, and then baked at 120°C to 180°C for 30 minutes to obtain a coating film. The curability of the obtained coating film was measured using a DuPont impact resistance tester. The plate on which the coating film was formed was placed on a cradle, an impact center (Φ1/2) was set, a 500-g load was dropped from a height of 30 cm, and the state of the coating film was observed. The lowest baking temperature at which cracks or chaps were not observed in the coating film was measured as the dissociation temperature.

### [Evaluation 3]

### (Gloss-1 of coating film)

The prepared coating composition C-1 was applied to an electrodeposited plate in a dry film thickness of 40 µm and then baked at 150°C for 30 minutes to obtain a coating film. The 20° gloss of the prepared coating film was measured using a gloss meter UGV-6P (manufactured by Suga Test Instruments Co., Ltd.). The evaluation criteria were as follows.

### (Evaluation criteria of gloss)

⊚: The gloss was 90% or more.
○: The gloss was 85% or more and less than 90%
Δ: The gloss was 80% or more and less than 85%
×: The gloss was less than 80%.

### (Gloss-2 of coating film)

Each prepared coating composition C-3 was applied to an alodine-treated aluminum plate in a dry film thickness of 40 µm and then baked at 180°C for 30 minutes to obtain a coating film. The 20° gloss of the prepared coating film was measured using a gloss meter UGV-6P (manufactured by Suga Test Instruments Co., Ltd.). The evaluation criteria were as follows.

### (Evaluation criteria of gloss)

⊚: The gloss was 80% or more.
○: The gloss was 75% or more and less than 80%
Δ: The gloss was 70% or more and less than 75%
×: The gloss was less than 70%.

### [Evaluation 4]

### (Image clarity (DOI) - 1 of coating film)

The prepared coating composition C-1 was applied to an electrodeposited plate in a dry film thickness of 40 µm and then baked at 150°C for 30 minutes to obtain a coating film. The prepared coating film was measured with Wave-Scan Dual (manufactured by BYK) to obtain a DOI value. The evaluation criteria were as follows.

### (Evaluation criteria of DOI)

⊚: The image clarity value was 90% or more.
○: The image clarity value was 85% or more and less than 90%.
Δ: The image clarity value was 80% or more and less than 85%.
×: The image clarity value was less than 80%.

### (Image clarity (DOI) - 2 of coating film)

Each prepared coating composition C-3 was applied to an alodine-treated aluminum plate in a dry film thickness of 40 µm and then baked at 180°C for 30 minutes to obtain a coating film. The prepared coating film was measured with Wave-Scan Dual (manufactured by BYK) to obtain a DOI value. The evaluation criteria were as follows.

### (Evaluation criteria of DOI)

⊚: The image clarity value was 80% or more.
○: The image clarity value was 75% or more and less than 80%.
Δ: The image clarity value was 70% or more and less than 75%.
×: The image clarity value was less than 70%.

### <Synthesis of triisocyanate compound>

### [Synthesis Example 1]

### (Synthesis of NTI)

1060 g of 4-aminomethyl-1,8-octamethylenediamine (hereinafter, may be sometimes referred to as "triamine") was dissolved in 1500 g of methanol in a four-necked flask equipped with a stirrer, a thermometer and a gas inlet tube. 1800 mL of 35% by mass of a concentrated hydrochloric acid was gradually added dropwise to the solution while cooling. Then, the resultant was concentrated under reduced pressure by removing methanol and water and dried at 60°C /5 mmHg for 24 hours to obtain triamine hydrochloride as a white solid. 650 g of the resultant triamine hydrochloride as a fine powder was suspended in 5000 g of o-dichlorobenzene, and the temperature of the reaction solution was raised while stirring. Then, when the temperature of the reaction solution reached 100°C, phosgene was started to be blown into the reaction solution at a rate of 200 g/hour, and the temperature was continued to be raised. Then, when the temperature of the reaction solution reached 180°C, phosgene was continuously blown into the reaction solution for 12 hours while maintaining the temperature. Then, after distilling off dissolved phosgene and the solvent under reduced pressure, vacuum distillation was carried out to obtain 420 g of colorless and transparent NTI having a boiling point of 161°C to 163°C / 1.2 mmHg. The NCO content of NTI was 50.0% by mass.

### [Synthesis Example 2]

### (Synthesis of HTI)

602 g of triethyl 1,3,6-hexamethylenetricarboxylate was reacted with hydrazine hydrate in a conventional manner to obtain 445 g of 1,3,6-hexamethylenetricarboxylate trihydrazide. Then, the resultant was reacted with sodium nitrite in an aqueous solution in the presence of hydrochloric acid to form the corresponding triazide, extracted with benzene, and then the extract was dried. The benzene solution thus obtained was added dropwise into a benzene reflux to allow thermal decomposition to proceed. The triisocyanate obtained by distilling off benzene was rectified under vacuum to obtain 246 g of colorless and transparent HTI having a boiling point of 152°C to 154°C / 1.3 mmHg. The NCO content of HTI was 60.1 % by mass.

### [Synthesis Example 3]

### (Synthesis of LTI)

122.2 g of ethanolamine, 100 ml of o-dichlorobenzene, and 420 ml of toluene were placed in a four-necked flask equipped with a stirrer, a thermometer, and a gas inlet tube, and hydrogen chloride gas was introduced therein while conducting ice-cooling to convert ethanolamine into hydrochloride. Next, 182.5 g of lysine hydrochloride was added thereto, the reaction solution was heated to 80°C to dissolve ethanolamine hydrochloride, and hydrogen chloride gas was introduced thereinto to obtain lysine dihydrochloride. Furthermore, hydrogen chloride gas was passed through at 20 to 30 ml/min and the reaction solution was heated to 116°C and maintained at this temperature until water stopped distilling off. The resultant reaction mixture was recrystallized in a mixture of methanol and ethanol to obtain 165 g of lysine β-aminoethyl ester trihydrochloride. 100 g of this lysine β-aminoethyl ester trihydrochloride was made into a fine powder and suspended in 1200 ml of o-dichlorobenzene, and the temperature of the reaction solution was raised while conducting stirring. When the temperature of the reaction solution reached 120°C, phosgene was started to be blown into the reaction solution at a rate of 0.4 mol/hour, the temperature was held for 10 hours and then raised to 150°C. The suspension was mostly dissolved. After cooling, the resultant was filtered, and the dissolved phosgene and solvent were distilled off under reduced pressure, followed by carrying out vacuum distillation to obtain 80.4 g of colorless and transparent LTI having a boiling point of 155°C to 157°C / 0.022 mmHg. The NCO content of LTI was 47.1% by weight.

### <Synthesis of aliphatic polyisocyanate (aliphatic diisocyanates derivative) >

### [Synthesis Example 4]

### (Synthesis of PI-1)

The inside of a four-necked flask equipped with a stirrer, a thermometer and a cooling tube was purged with nitrogen, and 1000 g of HD1 and 2 g of stearyl alcohol were charged. When the temperature in the reactor reached 70°C under stirring, 0.01 g of tetramethylammonium capriate was added to the reactor as an allophanate-forming / isocyanurate-forming catalyst. When the change in the refractive index of the reaction liquid reached 0.020, 0.03 g of an aqueous solution of 85% phosphoric acid was added to the reaction liquid to terminate the reaction. Furthermore, the reaction liquid was held at 100°C for one hour to completely deactivate the catalyst. After filtering the reaction liquid, unreacted HDI was removed using a falling thin film distillation apparatus to obtain polyisocyanate PI-1.

The NCO content of the resultant polyisocyanate PI-1 was 21.5%.

### [Example 1]

### (Production of blocked isocyanate composition BI-1)

The inside of a four-necked flask equipped with a stirrer, a thermometer, and a gas inlet tube was purged with nitrogen, and 100.0 parts by mass of NT1, 81.1 parts by mass of ε-caprolactam, and 86.6 parts by mass of dicyclohexylamine were added and stirred at 80°C for six hours to allow the reaction to proceed. After completion of the reaction, a blocked isocyanate composition BI-1 in a powder form was obtained.

### [Examples 2 to 11 and Comparative Examples 1 to 3]

### (Production of blocked isocyanate compositions 1 to 14)

Each blocked isocyanate composition in a powder form was obtained in the same manner as in Example 1, except that the types and blending amounts of the isocyanate and blocking agents were as shown in Tables 1 to 3.

### [Percentage of blocking agent to total mol of blocking agents]

The percentage of the blocking agent (b1) to the total mol of the blocking agents was calculated by dividing the blended amount (molar amount) of the amine-based thermally dissociable blocking agent containing a cycloalkane structure used during production by the total blended amount (molar amount) of the blocking agents, followed by multiplying the divided value by 100.

Similarly, the percentage of the blocking agent (b2) to the total mol of the blocking agents was calculated by dividing the blended amount (molar amount) of the thermally dissociable blocking agent different from the blocking agent (b1) and used during production by the total blended amount (molar amount) of the blocking agents, followed by multiplying the divided value by 100.

The effective NCO content of each resultant blocked isocyanate composition is shown in the following Tables 1 to 3. Furthermore, each evaluation result is shown in the following Tables 1 to 3.

**[Table 1]**

| | | Example 1 | Example 2 | Example 3 | Example 4 | Example 5 |
|---|---|---|---|---|---|---|
| Blocked isocyanate composition | | 1 | 2 | 3 | 4 | 5 |
| Isocyanate (parts by mass) | NTI | 100.0 | 100.0 | 100.0 | 100.0 | 100.0 |
| | HTI | | | | | |
| | LTI | | | | | |
| | PI-1 | | | | | |
| Blocking agent (parts by mass) | Dicyclohexylamine | 86.6 | 129.9 | 21.6 | 64.9 | 108.2 |
| | Dicyclopentylamine | | | | | |
| | Diisopropylamine | | | | | |
| | ε-Caprolactam | 81.1 | 54.0 | | | |
| | 3,5-Dimethylpyrazole | | | 103.3 | 80.3 | 57.4 |
| | 1,2,4-Triazole | | | | | |
| Addition percentage (% by mol) | Blocking agent (b1) | 40.0 | 60.0 | 10.0 | 30.0 | 50.0 |
| | Blocking agent (b2) | 60.0 | 40.0 | 90.0 | 70.0 | 50.0 |
| Effective NCO content | | 18.7% | 17.7% | 22.3% | 20.4% | 18.9% |
| Glass transition temperature | | 42°C | 53°C | 32°C | 35°C | 41°C |
| Blocking resistance | | ⊚ | ⊚ | Δ | ○ | ⊚ |
| Curability | | ○ | ○ | ⊚ | ⊚ | ⊚ |
| Dissociation temperature | | 150°C | 150°C | 135°C | 135°C | 135°C |
| Gloss-1 | | ⊚ | ⊚ | ○ | ○ | ⊚ |
| Gloss-2 | | ⊚ | ⊚ | ○ | ○ | ⊚ |
| Image clarity (DOI) - 1 | | ⊚ | ⊚ | ○ | ⊚ | ⊚ |
| Image clarity (DOI) - 2 | | ⊚ | ⊚ | ⊚ | ⊚ | ⊚ |

**[Table 2]**

| | | Example 6 | Example 7 | Example 8 | Example 9 | Example 10 |
|---|---|---|---|---|---|---|
| Blocked isocyanate composition | | 6 | 7 | 8 | 9 | 10 |
| Isocyanate (parts by mass) | NTI | 100.0 | 100.0 | 100.0 | 100.0 | |
| | HTI | | | | | 100.0 |
| | LTI | | | | | |
| | PI-1 | | | | | |
| Blocking agent (parts by mass) | Dicyclohexylamine | 129.9 | | 194.8 | | 130.1 |
| | Dicyclopentylamine | | 128.1 | | 118.9 | |
| | Diisopropylamine | | | | | |
| | ε-Caprolactam | | | | | |
| | 3,5-Dimethylpyrazole | 45.9 | 34.4 | 11.5 | | 69.0 |
| | 1,2,4-Triazole | | | | 28.8 | |
| Addition percentage (% by mol) | Blocking agent (b1) | 60.0 | 70.0 | 90.0 | 65.0 | 50.0 |
| | Blocking agent (b2) | 40.0 | 30.0 | 10.0 | 35.0 | 50.0 |
| Effective NCO content | | 18.2% | 19.1% | 16.4% | 22.9% | 20.2% |
| Glass transition temperature | | 50°C | 55°C | 63°C | 48°C | 45°C |
| Blocking resistance | | ⊚ | ⊚ | ⊚ | ⊚ | ⊚ |
| Curability | | ⊚ | ⊚ | ⊚ | ⊚ | ⊚ |
| Dissociation temperature | | 135°C | 135°C | 135°C | 130°C | 135°C |
| Gloss-1 | | ⊚ | ⊚ | ○ | ⊚ | ⊚ |
| Gloss-2 | | ⊚ | ⊚ | ○ | ⊚ | ⊚ |
| Image clarity (DOI) - 1 | | ○ | ○ | ○ | ○ | ○ |
| Image clarity (DOI) - 2 | | ○ | ○ | Δ | ○ | ○ |

**[Table 3]**

| | | Example 11 | Comparative Example 1 | Comparative Example 2 | Comparative Example 3 |
|---|---|---|---|---|---|
| Blocked isocyanate composition | | 11 | 12 | 13 | 14 |
| Isocyanate (parts by mass) | NTI | | | 100.0 | |
| | HTI | | | | |
| | LTI | 100.0 | | | |
| | PI-1 | | 100.0 | | 100.0 |
| Blocking agent (parts by mass) | Dicyclohexylamine | 81.3 | 70.3 | | 218.6 |
| | Dicyclopentylamine | | | | |
| | Diisopropylamine | | | 84.4 | |
| | ε-Caprolactam | | | | |
| | 3,5- | 64.7 | 12.4 | 34.4 | |
| | Dimethylpyrazole | | | | |
| | 1,2,4-Triazole | | | | |
| Addition percentage (% by mol) | Blocking agent (b1) | 40.0 | 75.0 | 0.0 | 100.0 |
| | Blocking agent (b2) | 60.0 | 25.0 | 100.0 | 0.0 |
| Effective NCO content | | 19.1% | 11.9% | 22.9% | 15.8% |
| Glass transition temperature | | 41°C | 52°C | 25°C | 58°C |
| Blocking resistance | | ⊚ | ○ | × | ⊚ |
| Curability | | ⊚ | ⊚ | ⊚ | ○ |
| Dissociation temperature | | 130°C | 135°C | 135°C | 140°C |
| Gloss - 1 | | ⊚ | ⊚ | Δ | ○ |
| Gloss - 2 | | ○ | ○ | Δ | ○ |
| Image clarity (DOI) - 1 | | ○ | Δ | ○ | × |
| Image clarity (DOI) - 2 | | ○ | × | ○ | × |

### Industrial Applicability

The blocked isocyanate composition of the present embodiment makes it possible to provide a blocked isocyanate composition that exhibits excellent gloss and image clarity when made into a coating film while maintaining good blocking resistance.

## Claims

1. A blocked isocyanate composition comprising a blocked isocyanate derived from a polyisocyanate compound and at least two blocking agents, wherein
the polyisocyanate compound comprises an aliphatic triisocyanate having a molecular weight of 200 to 350, and
a glass transition temperature is 40°C to 120°C.

2. The blocked isocyanate composition according to claim 1, wherein the aliphatic triisocyanate is a compound of general formula (I): 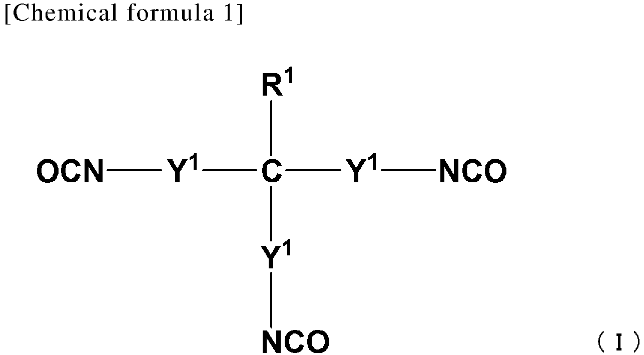 (in the general formula (1), a plurality of Y¹ is each independently a single bond or a C1-20 divalent aliphatic hydrocarbon group which may have at least one selected from the group consisting of an ester structure and an ether structure, the plurality of Y¹ is identical to or different from each other, and R¹ is a hydrogen atom or a C1-12 monovalent aliphatic hydrocarbon group).

3. The blocked isocyanate composition according to claim 1 or 2, wherein
a dissociation temperature of the blocking agents is 120°C to 150°C.

4. The blocked isocyanate composition according to claim 1 or 2, wherein
the blocking agents comprise: an amine-based thermally-dissociable blocking agent (b1) having a cycloalkane structure; and a thermally-dissociable blocking agent (b2) different from the amine-based thermally-dissociable blocking agent (b1).

5. The blocked isocyanate composition according to claim 4, wherein
a percentage of the amine-based thermally-dissociable blocking agent (b1) relative to a total mol of the blocking agents is 20% by mol to 95% by mol.

6. The blocked isocyanate composition according to claim 5, wherein
the percentage of the amine-based thermally-dissociable blocking agent (b1) relative to the total mol of the blocking agents is 40% by mol to 80% by mol.

7. The blocked isocyanate composition according to claim 4, wherein
the thermally-dissociable blocking agent (b2) is at least one selected from the group consisting of pyrazole-based compounds, oxime-based compounds, lactam-based compounds, alcohol-based compounds, and triazole-based compounds.

8. The blocked isocyanate composition according to claim 7, wherein
the thermally-dissociable blocking agent (b2) is a pyrazole-based compound or a triazole-based compound.

9. The blocked isocyanate composition according to claim 4, wherein
a percentage of the thermally-dissociable blocking agent (b2) relative to a total mol of the blocking agents is 20% by mol to 60% by mol.

10. The blocked isocyanate composition according to claim 1 or 2, wherein the blocked isocyanate composition is in a powder form at 23°C.

11. The blocked isocyanate composition according to claim 1 or 2, wherein the blocked isocyanate composition comprises an amorphous part.

12. A coating composition comprising: a blocked isocyanate composition of claim 1 or 2; and an active hydrogen compound.

13. A coating film formed by curing a coating composition of claim 12.

14. A method for producing a blocked isocyanate composition, comprising: reacting an aliphatic triisocyanate having a molecular weight of 200 to 350 and at least two blocking agents, wherein
a blocking agent (c1) that increases a glass transition temperature of the blocked isocyanate composition and a blocking agent (c2) that decreases the glass transition temperature of the blocked isocyanate composition are blended to adjust the glass transition temperature to 40°C to 120°C.
